# EUROPÄISCHE PATENTANMELDUNG

(11) **EP 2 098 782 A1**
(43) Veröffentlichungstag der Anmeldung: **09.09.2009**
(21) Anmeldenummer: 08020664.2
(22) Anmeldetag: 27.11.2008
(51) Int. Cl.: F23D 11/00, F02N 17/053, F01N 3/025

(54) **Vorrichtung und Verfahren zum Betreiben von Flammstartanlagen, Abgasreinigungsvorrichtungen von Verbrennungskraftmaschinen (Abgas-Partikelfilter) insbesondere an Lastkraftwagen, von Blockheizkraftwerken oder Stirlingmotoren**

(30) Priorität: 02.12.2007 DE 102007058176
(71) Anmelder: Beru Aktiengesellschaft, 71636 Ludwigsburg (DE)
(72) Erfinder: Schaller, Hans-Jörg, 50259 Pulheim (DE)

(57) **Zusammenfassung**

Vorrichtung zur Befähigung von Flammstartanlagen, Standheizungen, Rußfiltervorrichtungen an insbesondere Verbrennungskraftmaschinen und/oder BHKW und/oder Stirlingmotoren und/oder, insbesondere zur Erzeugung von Energie, insbesondere Heizenergie, umfassend wenigstens eine Drucklufterzeugungsvorrichtung (2), wenigstens eine Brennstoffversorgungsvorrichtung (3), wenigstens eine Saugstrahl und/oder Venturidüse (4), wenigstens ein Rückstauflammrohr (5).

## Beschreibung

Die Erfindung betrifft eine Vorrichtung und ein Verfahren zur ordnungsgemäßen bzw. vorschriftsmäßigen Betriebsbefähigung von Flammstartanlagen, AbgasPartikelfiltern, von BHKW's und/oder Stirlingmotoren und/oder Abgasreinigungsvorrichtungen von Verbrennungskraftmaschinen, insbesondere Rußfiltervorrichtungen an Lastkraftwagen sowie als Standheizung. Derartige Vorrichtungen sind im Ansaug- und/oder im Abgastrakt einsetzbar, insbesondere im Hinblick auf die europäischen Abgasnormen EU 3, EU 4, EU 5, EU 6 ff. sowie die Bundesimmissionsschutzordnung.

Derartige Flammstartanlagen sind bekannt, z. B. aus der DE 157 62 19 oder der DE 195 53 79, der DE 2115001 oder der DE 331 11 38. Allen ist gemein, dass sie den gleichen Kraftstoff wie zum Betrieb der Brennkraftmaschine verwenden, bei allen ist von Nachteil dass sie nur mit dem einen Kraftstoff zu betreiben sind und dass sie zu viel davon verbrauchen. Weiter ist ein Brenner für einen Abgas-Partikelfilter von der Fa. Eberspächer bekannt, näher beschrieben in der DE 19834864. Ein elektrisch betriebener Partikelfilter ist von der Daimler Benz AG unter der Nummer DE 38 00 723 bekannt, daran ist nachteilig, dass Kraftfahrzeuge nicht über ausreichende elektrische Ressourcen verfügen, um derartige Filter abzureinigen. Ebenfalls bekannt von der Firma Eberspächer ist eine Standheizung aus der DE 10 2005 026 443. Weiter ist ein Stirlingmotor gemäß DE 40 16 238 bekannt. Daran ist nachteilig, dass diese Vorrichtungen nur sehr unvollständig und daher wenig effektiv verbrennen, sie weisen einen erhöhten Verbrauch auf, es ist nichts über die Verbrennungssystematik bekannt. Aufgabe der vorliegenden Erfindung ist es, die oben genannten Nachteile zu vermeiden und eine Vorrichtung bzw. ein Verfahren zu schaffen, das den eingesetzten Brennstoff optimal umsetzt und geringst mögliche Emissionen freisetzt, bei sicherer Betriebsweise und unabhängig vom gewählten Brennstoff.

Die Aufgabe wird durch eine Vorrichtung gemäß dem Anspruch 1 sowie durch ein Verfahren gemäß Anspruch 10 gelöst. Hierbei ist von Vorteil, dass der eingesetzte Brennstoff, wie beispielsweise Heizöl, Diesel, Biodiesel, Pflanzenöl, tierische Fette, Altöl, Benzin oder Gas optimal in der Venturidüse verwirbelt bzw. in ein Aerosol verwandelt oder sogar vorverdampft werden, wobei die Brennstoffe in der Regel drucklos an die Venturidüse befördert werden und in dieser gemäß dem Strahlrohrprinzip mit in den Druckluftstrom eingetragen und anschließend im Rückstauflammrohr weitestgehend rückstandfrei verbrannt werden. Dieser Druckluftstrom, wird Vorteilhafterweise mittels eines Kompressors, der auf Nutzfahrzeugen bereits vorhanden ist, erzeugt. In einer erfindungsgemaßen Weiterbildung ist vorgesehen, dass der Brennstoff und die Drucke getrennt mittels eigener Düsen in das Rückstauflammrohr z.B. in einem definierten Winkel zueinander eingetragen werden.

Erfindungsgemäß werden die Luft- und Brennstoffmengenströme systembedingt vorgereinigt, um optimale Verbrennungs- und Emissionsergebnisse zu erzielen. Weiter ist erfindungsgemäß vorgesehen, dass die im Heizkessel oder dem Auspuff befindliche Verbrennungszone druck-bzw. gasdicht bezüglich der Umgebung, insbesondere z.B. dem Heiz- bzw. Motorraum ausgeführt ist. In einer erfindungsgemäßen Weitebildung ist eine Rezirkulationsvorrichtung vorgesehen. Mittels dieser kann Abgas, das noch brennbare Bestandteile enthält einem Nachverbrennungsprozess mit zusätzlicher Verwirbelung unterzogen werden. Besondere Vorteile ergeben sich in der Verwendung als Abgasreinigung, insbesondere als katalytische Abgasreinigung im Abgasstrom von Verbrennungskraftmaschinen, bei denen der Abgasstrom durch die erfindungsgemäße Vorrichtung geleitet wird und der enthaltene Anteil an Partikeln, insbesondere noch brennbare Bestandteile enthaltene Partikel auf ein Mindestmaß reduziert wird. In einer weiteren erfindungsgemäßen Weiterbildung ist vorgesehen, dass die Vorrichtung eine Primärluftzufuhrvorrichtung aufweist.

Vorteilhaft erweist sich hier, dass durch die zusätzliche Möglichkeit Luft bzw. Sauerstoff, insbesondere unter Erzeugung einer am Umfang des Gehäuses erzwungenen Tangentialströmung einzutragen, die Zahl der einsetzbaren Brennstoffe ansteigt. Dies gilt in gleicher Weise für die Sekundärluftzufuhrvorrichtung, die zusätzlichen Sauerstoff in die sogenannte Rückstauverbrennungszone einträgt. Sowohl der Primär- als auch der Sekundärluftstrom werden mittels drehzahlsteuerbarer elektrischer Gebläse oder alternativ mittels druck- oder drehzahlsteuerbarer Kompressoren erzeugt und zur Verfügung gestellt. Eine andere erfindungsgemäße Weiterbildung weist eine Regel- bzw. Steuervorrichtung auf. Vorteilhaft ist die Verknüpfung der Regel - bzw. Steuereinheit mit sämtlichen Messvorrichtungen und den Luftversorgungs- und Brennstoffzuführungsvorrichtungen.

Durch die regelungstechnische Anbindung ist es möglich, sämtliche Betriebsparameter der Vorrichtung abzufragen und bei Kenntnis der Vorrichtung des eingesetzten Brennstoffes (Eingabe beispielsweise mittels Interface) die Steuerung der Vorrichtung parametergebunden erfolgen zu lassen. Abhängig vom Brennstoff kann somit jede beliebige Leistung durch die Vorrichtung erreicht werden, es müssen lediglich in Abhängigkeit des jeweiligen Brennstoffs die notwendigen Luft- und Brennstoffmengen mittels der Regel- und Steuerungseinheit, in Verbindung mit den Luftversorgern, die Vorteilhafterweise über drehzahlregelbare Motoren, insbesondere Elektromotoren, angesteuert werden und der Brennstoffzuführeinheit, die ebenfalls über drehzahl- oder frequenzregelbare Pumpen angesteuert wird, zur Verfügung gestellt werden.

In einer erfindungsgemäßen Ausgestaltung ist vorgesehen, dass die Vorrichtung eine Temperatur- und/oder eine Druck- und/oder eine Brennstoffmengen- und/oder eine Drehzahlmessvorrichtung aufweist. Vorteilhafterweise lassen sich damit die notwendigen Verbrennungsparameter ermitteln, die für eine optimale Verbrennung notwending sind. Erfindungsgemäß ist eine Flammenüberwachungsvorrichtung, insbesondere mit Erdung und unabhängiger Stromversorgung vorgesehen, damit die Vorrichtung im Störungsfalle automatisch abschalten kann und einen Neustart mit dem Zünder mit veränderten Parametern versuchen kann.

Auf diese Weise wird die Vorrichtung zum Expertensystem und kann sich selbstständig auf z.B. ändernde Brennstoffqualitäten einstellen, dieses Expertenwissen wird in der Regeleinheit zentral gespeichert und im Wiederholungsfalle abgerufen. Eine erfindungsgemäße Weiterbildung sieht vor, dass das Rückstauflammrohr als geschlossene Hülse, insbesondere aus Keramik und/oder aus Metall und/oder mit katalytisch wirkenden Beschichtungen wie Lanthan - Cer - Cobaltit und/oder Platinnitrat und/oder Aluminiumoxid ausgeführt ist und wenigstens eine Abgasöffnung aufweist, die etwa kreisförmig oder schlitzförmig bzw. langlochförmig ausgeführt ist. Hier ist von Vorteil, dass, ähnlich den Vortexbrennern zusätzlich zum Effekt in der Venturidüse eine besonders vorteilhafte Durchmischung von Brennstoff und Luft bzw. Sauerstoff erfolgt.

Weiterhin tritt bei höheren Temperaturen ein ionisierender Effekt, der z.B. durch das Anlegen einer Hochspannung im Verbrennungs- bzw. Nachverbrennungsraum provoziert werden kann, ein und der zusätzlich die Verbrennungsergebnisse verbessert. Wenn dieser beschriebene Effekt eingetreten ist, kann weiterer Brennstoff, der nicht ohne weiteres brennbar ist, in das Rückstaurohr, beispielsweise mittels einer öffne- und schließbaren Klappe eingetragen werden oder aber mittels eines angeschlossenen Rohres Verbrennungsabgase zugegeben werden, die wahlweise direkt in das Rückstaurohr geleitet werden oder aber über den zusätzlichen Umweg durch die Rezirkulationsvorrichtung, um einen weiteren Verwirbelungseffekt zu erzielen.

Bei Verbrennungskraftmaschinenabgasen, insbesondere von Dieselmotoren muss eine Temperatur von mindestens 600° Celsius erreicht werden, um die im Abgasstrom enthaltenen Partikel zu entzünden, bei geeigneter Wahl von Katalysatoren, wie sie ebenfalls erfindungsgemäß in dieser Erfindung beschrieben werden, kann diese Temperatur auch niedriger ausfallen. Eine weitere erfindungsgemäße Weiterbildung sieht vor, dass eine Luft- und/oder Brennstoffvorheizung, insbesondere im Gegenstrom mit den Verbrennungs- und/oder Abgasen vorhanden ist.

Die vorteilhafte Erwärmung der Verbrennungsmengenströme, insbesondere ohne Verwendung fremder Energiequellen und unter Zuhilfenahme der vorhandenen Möglichkeiten erlaubt eine weitgehend unabhängige und sparsame Betriebsweise bei effektivsten Verbrennungsergebnissen und optimalsten Emissionswerten. Ein besonderer Vorteil besteht in der Eignung der Vorrichtung, dass sie in infnitesimal kleinen Schritten regelbar ist, durch die Veränderung der Luftströmungsgeschwindigkeit kann die Heizleistung entweder erhöht oder verringert werden. Ein weiterer erfindungsgemäßer Effekt ist die Kondensation der Wasserdampfanteile des Abgasstromes, was zur Erhöhung der Energieausbeute beiträgt.

Ein Einsatz des Brenners in alten oder neuen Kesseln ist ebenso realisierbar wie der Einsatz des Brenners in Kombination eines Stirlingmotors mit einem alten oder einem neuen Kesseln, wie dies in DE 40 16 238 z.B. zum Einsatz in Wohnhäisern im Stationärbetrieb beschrieben wird. Eine andere erfindungsgemäße Weiterbildung sieht ein Feuerungsrohr oder eine Kesselwandung eines Kessels bzw. eine Auspuff-oder Partikelfilterwandung eines Auspuffs vor. Vorteile liegen hier in der effektiven Strömungsführung.

In einer erfindungsgemäßen alternativen Ausgestaltung ist eine katalytisch wirkende Abgasreinigungsvorrichtung, insbesondere aus Kupfer, Edelstahl, Lanthan-Cer-Cobaltit und/oder Platinnitrat und/oder Aluminiumoxid vorgesehen. In einer weiteren anderen erfindungsgemäßen Weiterbildung ist vorgesehen, dass die Abgasreinigungsvorrichtung insbesondere zwischen Feuerungsrohr und Kesselwandung/Abgas- bzw. Brennkammerrohr angeordnet ist.

Hier kann Vorteilhaftehrweise eine weitere Partikelreduzierung stattfinden, was die Vorrichtung bzw. das Verfahren äußerst emissionsneutral werden lässt. Eine weitere alternative Ausgestaltung sieht vor, dass entweder mittels einer weiteren Zweistoffdüse, abhängig von den Betriebsparametern Drehzahl und Abgastemperatur, unterschiedliche Mengen wässriger Harnstofflösung bzw. Ammoniakwasser als sogenanntes Reduktionsmittel in die Abgase beigemengt wird, die Düse ist Vorteilhafterweise wassergekühlt.

Eine erfindungsgemäße Ausgestaltung sieht vor, dass der Zweistoffdüsewenigstens ein Resonatorraum nachgeschaltet wird, wobei die Austrittsöffnung aus dem Resonatorraum einen, bezogen auf den Innendurchmesser des Resonatorraumes, stark verminderten Querschnitt aufweist und als Drossel wirkt. Dieser Drossel kann sich ein weiterer Resonatorraum, der vorzugsweise ein vom ersten Resonatorraum sich unterscheidendes Volumen aufweist, anschießen. In einer weiteren alternativen Ausgestaltung ist vorgesehen, dass die wässrige Harnstofflösung gemeinsam mit dem Brennstoffluid in den Rauchgasstrom eingebracht wird.

Eine erfindungsgemäße Alternative sieht vor, dass die Abgasreinigungsvorrichtung insbesondere zwischen Feuerungsrohr, Kesselwandung z. B. der Wasserkühlung und Heizrippen z.B. in Form von dort räumlich angeordneten Metall- und/oder Keramikfasern bzw. Wirrfaservliesen angeordnet ist, dies hat einerseits strömungsund schalltechnische Vorteile, führt andererseits zu erhöhten Oberflächen hinsichtlich Partikelreduzierung bzw. im Hinblick auf die im System erforderliche Wärmeleitung hin zur Brenner- bzw. Kessel bzw. Wasserkühlungswandung.

Es zeigen:
- Figur 1: eine Vorrichtung zur Betriebsbefähigung
- Figur 2: einen Schnitt entlang A-A aus Figur 1
- Figur 3: Düse 4
- Figur 4: Düse 4 im Flammstartergehäuse
- Figur 5: BHKW mit Stirlingmotor und Vorrichtung nach Figur 1 oder 6
- Figur 6: Vorrichtung zu Betriebsbefähigung mit zwei Düsen
- Figur 7: Partikelfilter mit Vorrichtung nach Figur 1 oder 6
- Figur 8: eine Düse/Einspritzdüse

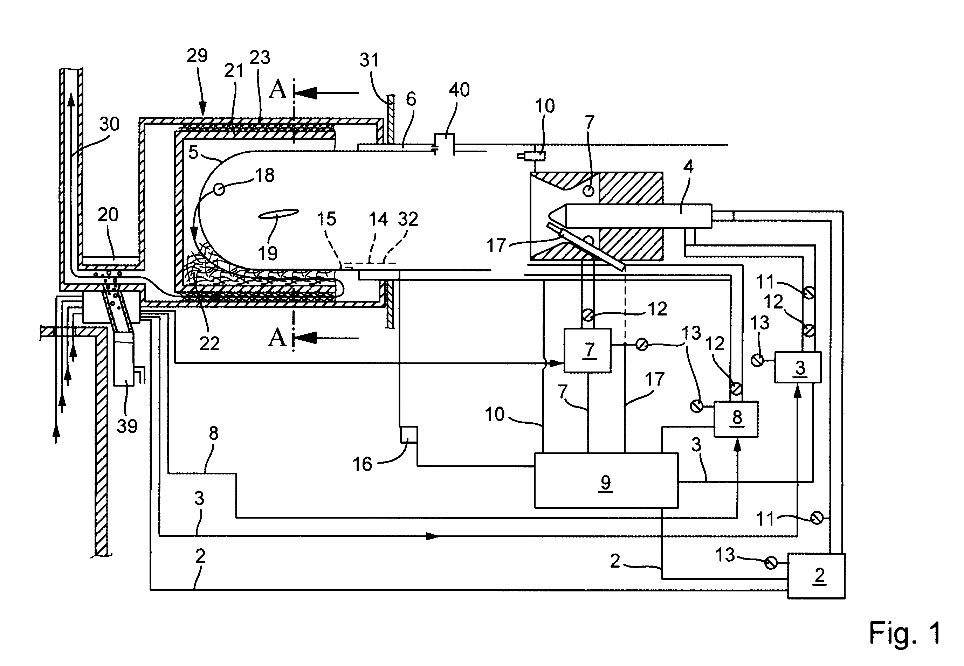

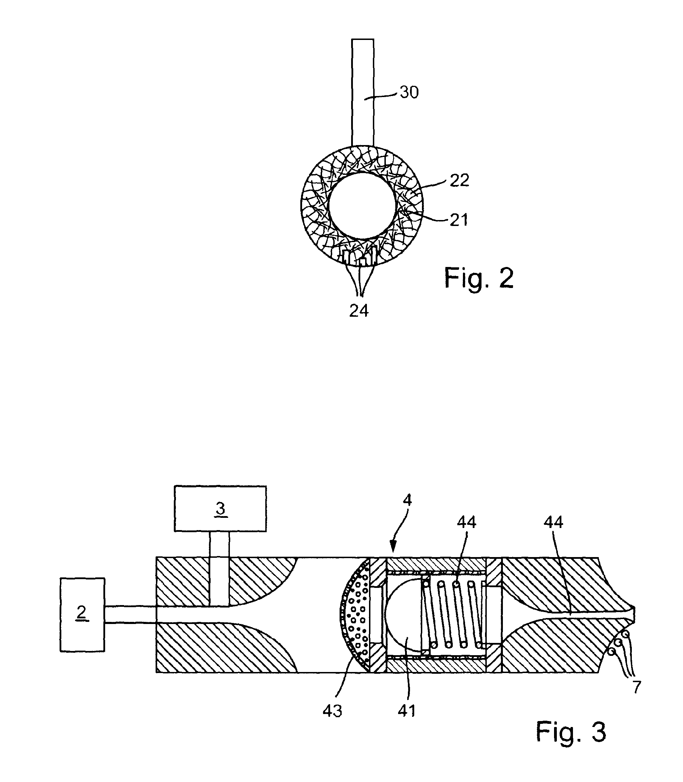

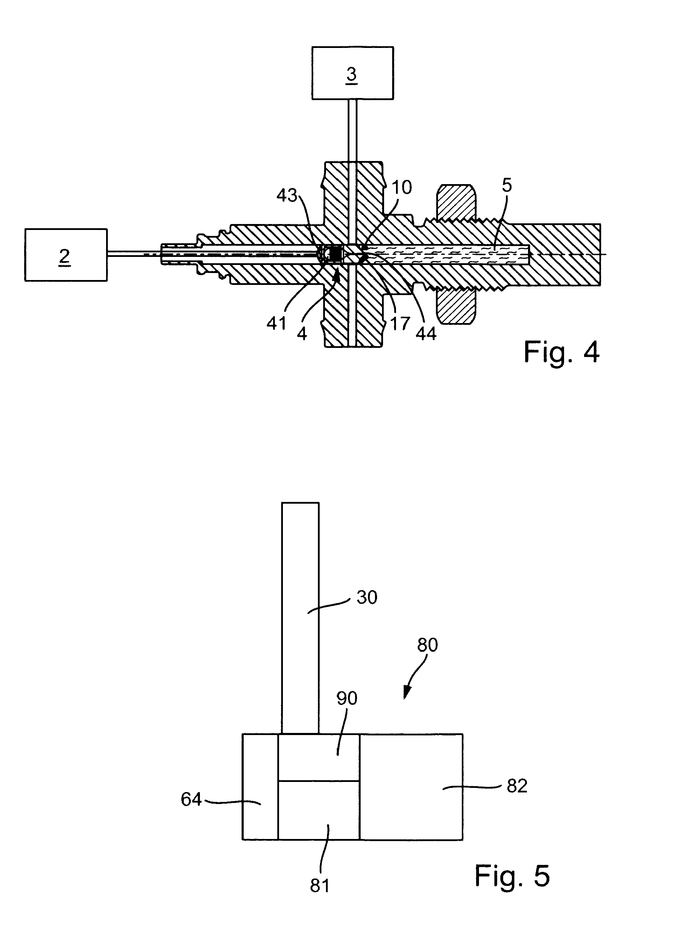

Die in Figur 1 beschriebene Vorrichtung, die man auch als Brenner 64 bezeichnen kann, weist eine Drucklufterzeugungsvorrichtung 2 mit negelbarem Mengenbegrenzungsventil und eine Brennstoffversorgungsvorrichtung 3 mit regelbarem Mengenbegrenzungsventil sowie eine Saugstrahl- oder Venturidüse 4 und ein Rückstauflammrohr 5 auf. Zwischen Rückstauflammrohr 5 und Düse 4 ist eine Rezirkulationsvorrichtung 6 angeordnet. Im Bereich um die Düse 4, die auch in Figur 3 und 4 gezeigt wird, ist eine Primänuftzufuhrvorrichtung 7 in der Weise angeordnet, dass sie die zusätzliche Luft tangential in Strömung versetzt. Die Drucklufterzeugungsvorrichtung 2, in aller Regel elektromotorisch betrieben, tritt in die Düse 4 ein und nimmt Brennstoff aus der Brennstoffversorgungsleitung 3 mit, passiert den Filter 43, der Verunreinigungen von der Büsenaustrittsbohrung 44, die einen bevorzugten Querschnitt von etwa 0,1 -0,4 mm aufweist, fernhält. Bevorzugt weist die Austrittsbohrung einen Querschnitt von 0,16 -0,2 mm auf. Die Düse 4 weist ein Ventil 41 mit feder 42 auf, das den Austritt von Brennstoff aus der Düse 4 im Stillstand der Vorrichtung verhindert.

Eine Sekundärluftzufuhrvonichtung 8 und eine Sekundärbrennstoffzufuhrvorrchtung 40, die jeweils mit steuerbarem Mengenbegrenzungsventil versehen sind, sind derart angeordnet, dass sie in den vorderen Verbrennungsbereich des im Wesentlichen geschlossenen Rückstaurohres 5 reichen. Die Vorrichtung zum Erhitzen von Heizungsanlagen oder Abgasanlagen weist eine Regel- bzw. Steuervorrichtung 9 auf, die mit den in der Vorrichtung verfügbaren Messfühlern kommuniziert, deren Werte abfragt, zwischenspeichert um nach einem Rechenlauf die optimalen Verbrehnungsparameter zu ermitteln und mittels Steuersignal an die jeweiligen Elektromotoren 2,3,7,8 weiterzuleiten und diese im entsprechenden Zusammenwirken zu befähigen, insbesondere in infinitesimal kleinen Schritten. Die Vorrichtung gemäß Figur 1 verfügt über eine Temperatur 10- und eine Druck 11- und eine Brennstoffmengen 12-und eine Orehzahlmessvorrichtung 13.

In Figur 4 wird der Brennstoff 3 in Strömungsrichtung eingetragen, die Druckluft 2 wird tangential an der Seitenwandung der Düse 4 eingetragen. Die besagte Vorrichtung verfügt über eine Rammenüberwachungsvorrichtung 14, insbesondere mit Erdung 15 und Stromversorgung 16, sie weist einen, bevorzugt zwei Zünder 17 auf. Das Rückstauflammrohr 5 ist als Geschlossene Hülse, insbesondere aus Keramik (ZrO2, Al2O3, SIC) als Porenbrener und/oder aus Metall als Strahlungsbrenner zur Erzeugung eines Druckgefälles und/oder mit katalytisch wirkenden Beschichtungen wie Lanthan-Cer-Cobaltit und/oder Platinnitrat und/oder Aluminiumoxid ausgeführt und weist regelmäßig auf der Hülsenmantelfläche verteilte Abgasöffnungen auf, die etwa kreisförmig 18 (Durchmesser: 0,1-0,2 mm) und/oder schlitzförmig 19 (0,1 - 2 mm breit, 30 - 60 mm lang) ausgeführt sind. Das Rückstauflammrohr ist als geschlossene Hülse 5 insbesondere aus Keramik und/oder aus Metall und/oder mit katalytisch wirkenden Beschichtungen wie Lanthan-Cer-Cobaltit und/oder Platinnitrat und/oder Aluminiumoxid ausgeführt ist und wenigstens eine Abgasöffnung aufweist, die etwa kreisförmig 18 und/oder schlitzförmig 19 ausgeführt ist.

Vorzugsweise wird Loch- oder Schlitzblech verwendet. Vorzugsweise besteht die gelochte und/oder geschlitzte Hülse 5 aus temperaturbeständigen Stählen, die besonderes vorzugsweise wolfram- und/oder hafnium- und/oder nickellegiert sind. Eine derartige Hülse 5 ist oxidationsbeständig, weist beispielsweise einen Schmelzpunkt von etwa 2200 Grad Celsius und verfügt bei etwa 1600 Grad Celsius über eine Zugfestigkeit von etwa 200 N/mm². Eine Luft- und Brennstoffvorheizung erfolgt im Gegenstrom 20 mit den Verbrennungs-oder Abgasen 30.

Die Vorrichtung verfügt über ein Feuerungsrohr 21 und eine Kesselwandung bzw. eine Auspuffwandung 23 sowie über einen Kessel 29 und ist in einer alternativen Ausgestaltung wassergekühlt oder einen Auspuff 29. Sie enthält eine katalytisch wirkende Abgasreinigungsvorrichtung 22, insbesondere aus Kupfer, Edelstahl, Lanthan-Cer-Cobaltit und/oder Platinnitrat und/oder Aluminiumoxid. Die Abgasreinigungsvorrichtung 22, 63 ist zwischen Feuerungsrohr 21 und Kesselwandung 23 angeordnet.

In einer alternativen Ausgestaltung gemäß Figur 2 ist die Abgasreinigungsvorrichtung 22 insbesondere zwischen Feuerungsrohr 21, Kesselwandung 23 und Heizrippen 24 angeordnet, kann sich aber in besonderen Fällen sogar im Feuerungsrohr 21 befinden und ist in einer bevorzugten Ausführungsform als keramisches und/oder metallisches Wirrfaservlies ausgestaltet.

Die erfindungsgemamäße Vorrichtung weist wenigstens eine Luft- und/oder Brennstoffvorheizung, insbesondere im Gegenstrom 20 mit den Verbrennungs-und/oder Abgasen 30 auf sowie wenigstens ein Feuerungsrohr 21 und/oder wenigstens eine Kesselwandung und/oder eine Auspuffwandung 23 wenigstens eines Kessels und/oder eines Auspuffs 29. Weiter weist sie wenigstens eine insbesondere katalytisch wirkende Abgasreinigungsvorrichtung 22, insbesondere aus Kupfer, Edelstahl, Lanthan-Cer-Cobaltit und/oder Platinnitrat und/oder Aluminiumoxid auf, wobei die Abgasreinigungsvorrichtung insbesondere zwischen Feuerungsrohr 21 und Kesselwandung 23 angeordnet ist. In einer weiteren Ausgestaltung kann die Abgasreinigungsvorrichtung 22 insbesondere zwischen Feuerungsrohr 21, Kesselwandung 23 und Heizrippen 24 angeordnet sein. Im Abgasstrom 30, insbesondere im Bereich des Gegenstromes 20 kondensiert Wasserdampf zu säurehaltigen Wassertropfen, die in den Bereich der Kondensatauffangvorrichtung bzw. der Neutralisations- bzw. pH - Pufferungsvorrichtung 39 gelangen.

Die Vorrichtung zum Befähigen von Kesseln ist in einem druck- und schalldichten Gehäuse 31, das lediglich schematisch angedeutet ist, integriert. Ein handelsüblicher Entlüfter für den Einsatz flüssiger Brennstoffe ist in der Brennstoffversorgungsvorrichtung 3 vorgesehen und nicht explizit dargestellt. Wird die Vorrichtung als Heizungskessel eingesetzt, so weist sie eine handelsübliche und nicht dargestellte Rücklauftemperaturanhebung auf. Weiterhin verfügt die in Figur 1 dargestellte Vorrichtung über eine Lambdasonde 32 zur Ermittlung des Sauerstoffgehaltes in der Verbrennungszone, die mit der Regeleinheit 9 kommuniziert.

Die Vorrichtung verfügt über eine öffen- und schließbare Klappe 40, mittels derer beispielsweise Rauchgasströme von Verbrennungskraftmaschinen wie z.B. von BHKW's oder LKW-Motoren zugeführt werden können. Weiterhin ist es möglich die Heißgasströme von Stirlingmotoren über die Öffnung 40 zuzuführen. In Figur 5 wird ein BHKW dargestellt, das über einen Stirlingmotor 81 einen General 82 antreibt. Der Stirlingmotor 81 wird über einen Brenner 64 erhitzt, wobei die Abgase 30 durch den schematisch dargestellten Kamin entweichen. Alternativ weist die in Figur 5 dargestellte Anlage wie bereits in DE 4016238 dargestellt, eine Kombination aus Stirlingmotor 81 und Heizkesselanlage 90 auf.

In einer alternativen Ausgestaltung ist sogar vorgesehen, über die Öffnung 40 Fest- bzw. Flüssigbrennstoffe bzw. - bestandteile zuzuführen, wenn die Verbrennung in vollem Gange ist. In der Kesselvariante ist die Regel- und Steuervorrichtung 9 mit je einem Temperaturmessfühler in Vor- und Rücklauf und im Abgasstrom 30 verbunden und regelt die Vorrichtung stufenlos, um die voreingestellte Temperaturdifferenz zwischen Vor- und Rücklauf bzw. im Abgasstrom zu garantiereren.

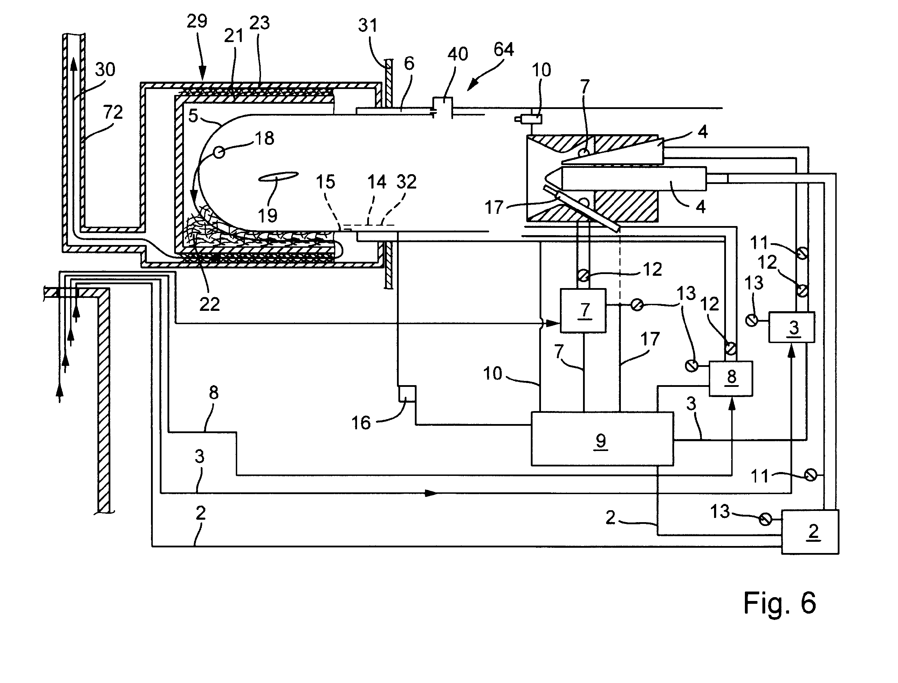

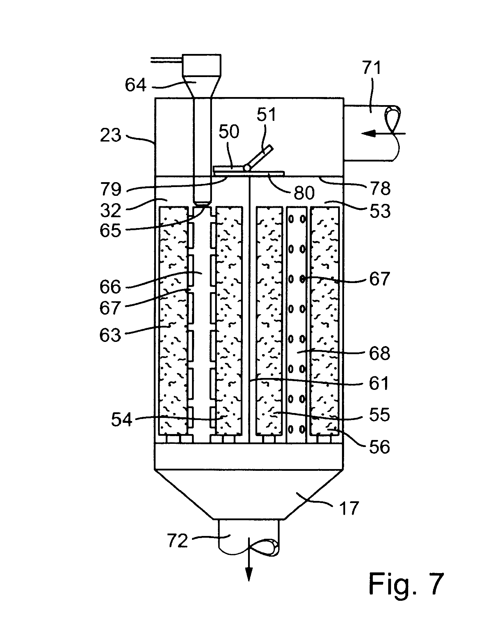

Die Abgasreinigungsvorrichtung 22 erhöht die wirksame Oberfläche und verbessert den Wärmeübergang, was zur Kondensation des im Abgas enthaltenen Wasserdampfes führt bzw. führen kann. Figur 6 zeigt eine Alternative des Brenners 64 zu Figur 1 auf, wobei hier keine Kondenswassemeutralisation zu sehen ist, da hier vorzugsweise mit Abgastemperaturen größer 600 Grad Celsius, mindestens jedoch größer 300 Grad Celsius gearbeitet wird Im Dauerbetrieb bei etwa 350 Grad Celsius verbraucht die dargestellte Ausführung etwa 0,2 Liter Fluidbrennstoff pro Betriebsstunde. Weiter weist die Vorrichtung nach Figur 6 wenigstens eine Düse 4 auf, die Brennstoff in die Hülse 5 einbringt sowie wenigstens eine Düse 4, die die Druckluft in besagte Hülse 5 einbringt. In Figur 7 ist ein Abgas-Partikelfilter, wie er vorzugsweise in LKWs zum Einsatz kommt zu sehen. Im Gehäuse 23 sind angeordnet, die Einströmöffnung 71 für partikelhaltige Abgasströme. Weiter ist darin angeordnet der Brenner 64. Aus Sicht der partikelhaltigen Abgase folgt nun entweder Öffnung 79 oder 80, die von den Ventilklappen 50 bzw. 51 abgedeckt oder freigegeben werden, je nach Partikelfracht in der Filterkammer 52 oder 53.

Diese Filterkammem werden im Wechsel bis zur Lastgrenze mit Partikeln beaufschlagt, bis der Druckverlust durch das Anwachsen der Partikelschicht so groß ist, dass ein thermisches Abreinigen mittels Brenner 64 erfolgt. Um nun nicht das Fahrzeug oder den stationären Motor stilllegen zu müssen, wird der partikelhatige Abgasstrom mittels der Ventilklappen 50, 51 in die freie Filterkammer, getrennt durch Zwischenwand 61 geleitet - auch mehr als zwei Filterkammern z.B. als Revolvermagazin drehbar um den Brenner 64 angeordnet sind denkbar. Während die leere Filterkammer mittels Filterkerzen 54,55,56,63, die mittels Ausströmöffnung 65, Verteilerrohr 66,68 und Bohrungen 67 kommunizierend verbunden sind, weiter Pratikel ausfiltert, wird der Brenner 64 aktiviert und erzeugt einen Heizgasstrom, der insbesondere die in den Filtern (Filterkerzen, insbesondere aus Keramikfasern) der beaufschlagten Filterkammer befindlichen Rußpartikel zündet.

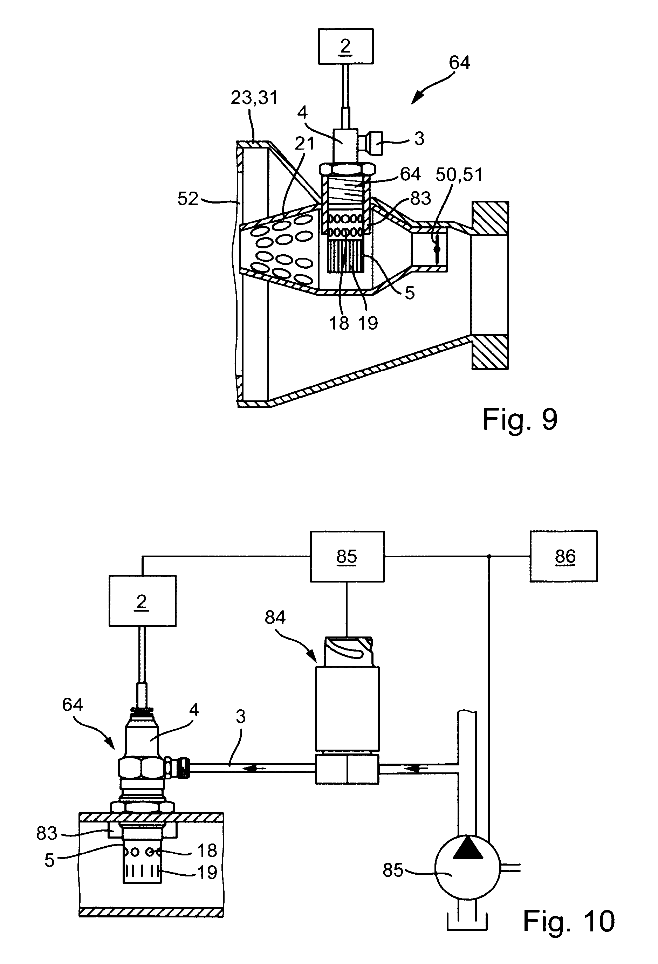

Dies erfolgt ungefähr ab 600 Grad Celsius, bei Verwendung einer katalytisch beschichteten Filteroberfläche reichen auch Temperaturen um etwa 250 Grad Celsius. Wenn die Rußpartikel entzündet sind, kann der Brenner wieder abgeschaltet werden und ausreichend (Luft-) Sauerstoff zugeführt werden, so dass es zu einer ausreichende Abreinigung der Filter bei geringste Einsatz von Brennstoff kommt. In einer alternativen Ausgestaltung ist vorgesehen, dass der Brenner 64 in der Filterkammer 52 im Vollstrom arbeitet, so dass auf einen Ausweichfilterraum verzichtet werden kann, was die Baugröße des Partikelfilters um wenigstens 50% verkleinert. In Figur 9 wird ein Brenner 64, der auch als Flammglühstartvorrichtung aus Figur 4 bekannt ist, dargestellt. Der Brenner 64 verfügt über eine Venturidüse 4, eine regelbare Drucklufterzeugungsvomchtung 2 mit regelbarem Mengenbegrenzungsventil und eine Brennstoffversorgungsvorrichtung 3 mit regelbarem Mengenbegrenzungsventil sowie eine Saugstrahl- oder Venturidüse 4 und ein Ruckstauflammrohr 5 auf. Zwischen Rückstauflammrohr 5 und Düse 4 ist eine Rezirkutationsvorrichtung 6 angeordnet. Im Bereich um die Düse 4, die auch in Figur 3 und 4 gezeigt wird, ist eine Primärluftzufuhrvorrichtung 7 in der Weise angeordnet, dass sie die zusätzliche Luft tangential in Strömung versetzt. Die Drucklufterzeugungsvorrichtung 2 liefert eine Expansionsströmung, diese tritt in die Düse 4 ein und rammt Brennstoff aus der Brennstoffversorgungsteitung 3 mit, passiert den nicht dargestellten Filter und wird mittels der Düse 4 atomisiert.

Durch das Zusammenwirken von Expansionsströmung einerseits und Rückstauflammrohr 5 mit seinen oben ausführlich dargestellten Abgasöffnuhgen 18,19 entsteht ein Staudruck in der Hülse, in dem der atomisierte Öl-/Luftnebel höchst effizient verbrannt wird. Weiterhin weist der Brenner 64 eine Wasserkühlung 83 auf, die Vorteilhafterweise mit dem bei Fahrzeugen üblidhen Heiz- bzw. Kühlwasserkreislauf in Verbindung steht.

In Figur 10 wird ein Brenner 64 gezeigt, der auch als Flammglühstartvorrichtung aus Figur 4 bekannt ist. Der Brenner 64 verfügt über eine Venturidüse 4, eine regelbare Drucklufterzeugungsvorrichtung 2 mit regelbarem Mengenbegrenzungsventil und eine Brennstoffversorgungsvorrichtung 3 mit regelbarem Mengenbegrenzungsventil 84 sowie eine Saugstrahl- oder Venturidüse 4 und ein Rückstauflammrohr 5 auf. Zwischen Rückstauflammrohr 5 und Düse 4 ist eine Rezirkulationsvorrichtung angeordnet. Im Bereich um die Düse 4, die auch in Figur 3 und 4 gezeigt wird, ist eine Primärluftzufuhrvorrichtung 7 in der Weise angeordnet, dass sie die zusätzliche Luft tangential in Strömung versetzt. Die Drucklufterzeugungsvorrichtung 2 liefert eine Expansionsströmung, diese tritt in die Düse 4 ein und nimmt Brennstoff aus der Brennstoffversorgungsleitung 3 mit, passiert den nicht dargestellten Filter und wird mittels der Düse 4 atomisiert.

Durch das Zusammenwirken von Expansionsströmung einerseits und Rückstauflammrohr 5 mit seinen oben ausführlich dargestellten Abgasöffnungen 18,19 entsteht ein Staudruck in der Hülse 5, in dem der atomisierte Öl-/Luftnebel höchst effizient verbrannt wird. Weiterhin weist der Brenner 64 eine Wasserkühlung 83 auf, die Vorteilhafterweise mit dem bei Fahrzeugen üblichen Heiz- bzw. Kühlwasserkreislauf in Verbindung steht.

Der etektrische Kompressor 2 wird von dem Steuergerät 85 in der Weise angesteuert, dass das Steuergerät 85 über Sensoren 86 (z.B. Drehzahl, Temperatur Sauerstoffgehalt (Lambdasonde) Fahrzeug- bzw. Betriebsdaten erhält und mittels der im Steuergerät vorhandenen Datenbank in entsprechende Steuersignale an den Kompressor 2 und das Magnetventil 84 bzw. Förderpumpe 85 umsetzt.

Ein weiterer Vorteil liegt darin, dass eine derartige Düse mit unterschiedlichsten Brennstoffen beaufschlagt werden kann, auch gasförmigen.

Ein weiterer erfindungsgemäßer Vorteile ist eine bessere Verbrennung, weil durch die Injektorwirkung z. B. der Aggregatzustand von flüssig in gasförmig verändert wird, und dabei auch die Partikelgröße um ein Mehrfaches vermindert wird, weil das Gasgemisch eine bessere Luft-Sauerstoffbeladung erhält, weil die Flammentemperatur fast doppelt so hoch ist, weil sich die Injektor-Flamme vorzüglich zur Strahlungswärme eignet, weil die Regelbarkeit bzw. die Modulierbarkeit des Brenners stufenlos von Null bis zur Volllast möglich ist, weil das Einsatzgebiet der Düse bzw. des mit der Düse verwendeten Brenners unbeschränkt ist, da sie/er bei allen Anwendungsarten als Flammstartanlage oder als Rußfilterregenerationsbrenner, als Standheizung, sogar in handelsüblichen Kesseln eingesetzt werden kann, weil mit bis zu null Prozent Sauerstoffüberschuss gefahren werden kann, weil mit der neuen Hohlkegel-Formation ein Flächenbrenner erstellt werden kann, weil die Detonationen und die Pulsationen erfindungsgemäß wegfallen, weil hier mit einem Öldrucksystem im Einstrangsystem gearbeitet wird, welches erfindundsgemäß keinen Ölschnellentlüfter benötigt, weil ein Rückschlagventil vorgesehen ist, welches die Nachtropfmenge weitgehend reduziert und den Anfahrzyklus/Start weich erscheinen lässt, weil durch die neuen Ringkanäle erfindungsgemäß ein Maximum an Luftsättigung erreicht wird, weil durch die Feinstfiltervorschaltung eine verschmutzungsbedingte Störung erfindungsgemäß fast unmöglich wird, weil der Verbrennungsraum erfindungsgemäß mit Überdruck gefahren werden kann, weil die Energieausbeute des Brennstoffes erfindungsgemäß deutlich verbessert wird, weil durch die erfindungsgemäße Ausgestaltung der Verbindungskanäle Druckuft/Öl die Geschwindigkeitsverhältnisse verbessert werden. Die Injektor-Düse ft-ndät dort ihr Einsatzgebiet, wo es gilt, effizienter mit den Heizmedien Öl oder Gas umzugehen. Ein besonders geeigneter Einsatzort ist in einem Brenner mit einem regelbaren Drucklufterzeuger, einer regelbaren Luftturbine und einer regelbaren Ölpumpe.

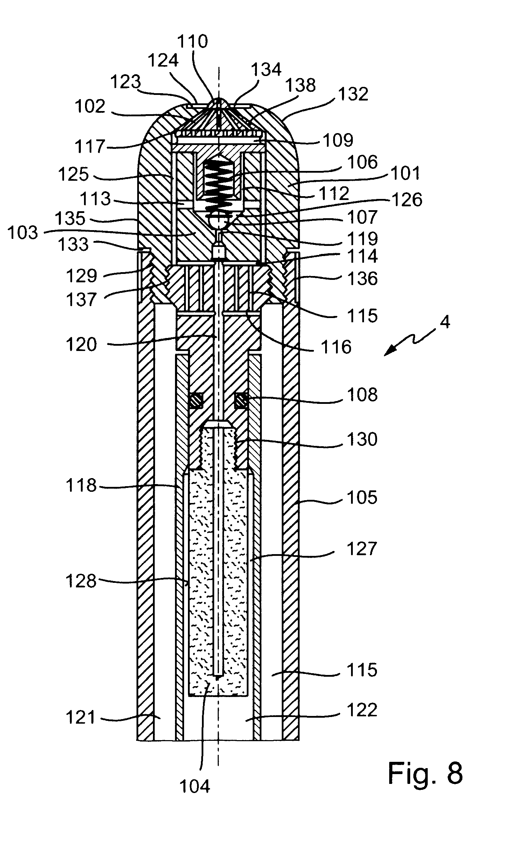

Außerdem ist die Möglichkeit gegeben, dass Öl so gut wie drucklos zu verarbeiten, da durch den Einsatz des Strahlpumpeneffektes das Öl mittels der strömenden Druckluft mitgerissen bzw. atomisiert wird. Die Heizölpumpe dient lediglich der Dosierung und der Überwindung der Reibungsverluste im Filter und in den Förderkanälen bis hin zur Ölkammer 26, wie man in Figur 8 sehen kann. Konstruktionsbedingt erfolgt in der Düse eine besonders vorteilhafte Vermischung von Gas und Fluid. Drehzahlgeregelte Druckluftkompressoren und Ölpumpen, die drehzahlgeregelt sind, eignen sich ganz besonders in Verbindung mit der erfindungsgemäßen Düse.

Aus der bisherigen Saugleitung wird eine Druckleitung, was erfindungsgemäß den Schneflentlüfter überflüssig macht. Durch die Druckluft wird mit einem definierten Druck ein Injektorfeld aufgebaut welches den Brennstoff in Feinstform mitreißt.

Diese sogenannte Atomisierung der Ölpartikel wird mit Druckluft übersättigt, und zwar noch bevor das angereicherte Gemisch, die Düsenbohrung, an der Düsenspitze 110 vorbei sich entspannt und ausströmt. Die Abrisskante 24 in der Düsenbohrung und die Düsenspitze 110 sorgen dafür, dass sich das Gemisch weiches durch die Turbinenluft außen nochmals angereichert wird und den sogenannten Hohlkegel-Drall bekommt, der durch die Strömungsleitelemente 138 mitbeeinflusst wird. Erfindungsgemäß erzeugt der Hohlkegel in Verbindung mit den Strömungsleitelemeten 138 ein effektives quasistöchiometrisches Gemisch. Die Sauerstoffversorgung wird von der Hohlkegelseite wie auch von der Außenseite gewährleistet. Hier wird erfindungsgemäß eine effektive Verbrennung erzeugt, zumal die bereits vorgewärmten Rezirkulationsgase für eine rußfreie Flamme sorgen.

Die erfindungsgemäßen Vorteile dieser Leistungsregelung, die im Verhältnis z.B. von 4 zu 10 auch elektronisch erfolgen kann. Dieses System lässt sich auch bei der verwendung von Erdgas erzielen Ein weiterer Vorteil, dieser Zweistoff-Injektor-Düse ist, dass alle Funktionselemente auf engstem Raum angeordnet sind, z.B. die Düsenfunktion, das Injektion-System, das Dosier-System 103, 119, das Filter-System 104 sowie das Rückschlag - System 106,107 und die Düsenspitze 110, verbunden mit einem metrischem Gewinde.

Ein Doppel-Nußschlüssel für die Zweistoff-Injektor-Düse, lässt die Montage einem Handgriff vornehmen, wenn ein passender Schlüssel-Sechskantansatz am Düsenrohr angeordnet ist. Das in Figur 8 gezeigte Düsenstockrohr 105 ist mittels dem metrischen Düsenrohrgewinde 137 und Schlüsselansatz-Düsenrohr 136 mit der Düsen-Kappe 101 verbunden und hält die gesamte Injektor-Zweistoffdüse zusammen. Die Düsen-Kappe 101, die z. B. aus Messing oder aus Edelstahl besteht, hat eine äußere aerodynamische Form, wie dies die Primärluftkurve 132 und die Schlüsselansatzkappe 135 mit metrischem Kappengewinde 129 in Figur 1 zeigen. Die Düsenspitze 110 des Zerstäuberkegels 102 steckt in der eigentlichen Düsenbohrung 134 der Düsen-Kappe 101 mit definiertem Abstand zur Abrisskante 124 und der Abrissebene 123. Hinter Kante 124 und Ebene 123 und innerhalb der Düsenkappe wird der Entspannungs-Raum Druckluft/Öl 11 in Figur 8 gezeigt, der in einer alternativen Ausgestaltung, wie sie in Figur 9 dargestellt wird und welcher ebenfalls aus Kanälen und Flächen besteht und welcher mittels der Dichtungskante 117 korrespondiert, in etwa tangential in Form von Stromungsieitetementen 138 angeordnet ist.

Der Zerstäuberkegel 102 schafft die eigentliche Umsetzung zum optimalen Öl-Gasgemisch und wird unterstützt durch die Entspannung beim Austritt an die Atmosphäre. An dieser Stelle erfolgt auch die Beladung mit Sauerstoff. Der Kanal 119 stellt die eigentliche Ölzufuhr dar und zwar dosiert und ist im wesentlichen auf den Umgebungsdruck abgestimmt. Die Ventilkugel 107 mit der Druckspiralfeder 106 oder alternativ auch eine Membranlösung sorgen für das Unterbrechen der Ölzufuhr nach Beendigung des Brennervorganges, denn je weniger nachlaufendes Brennstofffluid sich nach Brennerende nach dem Ventil 106, 107 befindet, desto weniger Blindtropfmenge gibt es. Aus der drucklosen bzw. mit Umgebungsdruck beaufschlagten Ölkammer 126 wird das Öl über die seitlichen Ölkanäle 113 herausgerissen. Der Venturiringraum 125 führt die Druckluft auch am Ringkanal-Öl 112 vorbei und es entsteht eine Injektorwirkung.

Hier wird das Öl gleichmäßig in Abhängigkeit von der Geschwindigkeit mitgerissen. Der Ringkanal-Druckluft/Öl 109 erzeugt eine gleichmäßige Kanalverteilung

Bei Brertnerstillstand sind alle Kanäle ölfrei, da das Ventil 106, 107 derart eingestellt ist, dass bei abgeschaltetem Gebläse und Ölpumpe die Federkraft ausreichend groß ist, um den Dosierdrossel-Kanal 119 zuverlässig zu verschließen Aus der Luftkammer 121 wird die Druckluft in den Ringkanal-A-Druckluft 116 durch die Verbindungskanäle 115 in den Ringkanal-B-Druckluft 114 wegen der gleichmäßigen Verteilung und des geringsten Druckverlustes gedrückt. Öl und Druckluft werden mittels Dosiereinsatz 103 mengenmäßig definiert zugeordnet. Das Öl kommt über das Ölrohr 118 zum Filter104 und wird mittels O-Ring 108 an der frühen Undefinierten Vermischung mit Luft gehindert. Über den Ölentspannungsraum 122 gelangt das Öl in den Öl-Verteilerraum 127 mit geregeltem Pumpendruck bis zum O-Ring-Öl 108 und muss durch den Feinstfilter104 welcher eine große Tiefenfiltrierungsfläche 128 aufweist, die Trenngrenze ist feiner als die Bohrung der Dosierdrossel, um Verschmutzungen zu vermeiden.

Durch die sehr enge Ölkanaiführung 120 ist keine Ölbevorratung vorgesehen. Das Filtergewinde 130 ist metrisch. Der Dosiereinsatz 103 hat ein metrisches Gewinde 131. Der Dichtungsspalt 133 ist als Dehnspalt und gleichzeitig als metallische Dichtfläche ausgelegt. Ein wesentlicher Vorteil der Erfindung ist, dass alle wesentlichen Funktionselemente der Düse wie Zerstäubungs-, Ventil-, Injektor- und Filterelement im Feuerraum, alle mittels metrischem Gewinde verbunden und elektronisch geregelt sind. Schon die dadurch erfolgende Vorwärmung der Median ist eine große Verbesserung. Eine bessere Verbrennung, z.B. durch die Injektorwirkung im Aggregatzustand von flüssig zu gasförmig mit verkleinerter Partikelgröße ist die Folge. Kleinstleistungen bei optimalen Verbrennungszuständen sind jetzt möglich. Eine bessere Luft-Sauerstoffbeladung erzeugt auch eine optimalere Flammentemperatur, eine bessere Verbrennung, bezogen auf herkömmliche Brenner, ist die Folge. Eine Injektor-Flamme eignet sich zum Einsatz als sogenannter Strahlungsbrenner mit Strahlungshülse. Die stufenlose Regelbarkeit des Brenners wird jetzt erstmals von Nulllast auf Volllast möglich.

Brenner mit derartigen Düsen sind an allen oben beschriebenen Vorrichtungen und Fabrikaten einsetzbar. Detonationen und Pulsationen gehören weitgehend der Vergangenheit an. Das Ölsystem wird im Einstrangbetrieb angewendet. Der Verbrennungsraum kann im Überdruck betrieben werden, die Energieausbeute des Brennstoffes verbessert sich signifikant, bezogen auf den Stand der Technik. Die Düse in Figur 8 umfasset wenigstens eine Düsenkappe 101, wenigstens einen Zerstäuberkegel 102, wenigstens einen Dosiereinsatz103, wenigstens ein Ventil 106,107 sowie wenigstens eine Gaszuleitung 115 und wenigstens eine Fluidzuleitung 113, 120. Die Düse weist einen Filter 104 auf, einen Düsenstockrohr 105 sowie wenigstens einen Gasraum 121 und wenigstens einen Fluid-Verteilerraum 127 aufweist. Die in Figur 8 dargestellte Düse weist wenigstens einen Ringkanal-Gas 114, 116 auf, wenigstens einen Ringkanal-Fluid 112 und wenigstens einen Ringkanal - Gas/Fluid 109. Weiter verfügt sie über einen Ringraum 125 zur Vermengung von Gas und Flüssigkeit. Die in Figur 8 gezeigte Düse weist wenigstens eine Abrisskante124 und/oder eine Abrissebene 123 auf.

Die Düse verfügt über wenigstens einen Zerstäuberkegel 102, der wenigstens eine Düsenspitze 110 aufweist und/oder tangential angeordnete Strömungsleitelemente 138. In einer alternativen Ausgestaltung ist vorgesehen, die in Figur 8 dargestellte Düse 4 als Einspritzdüse zu verwenden.

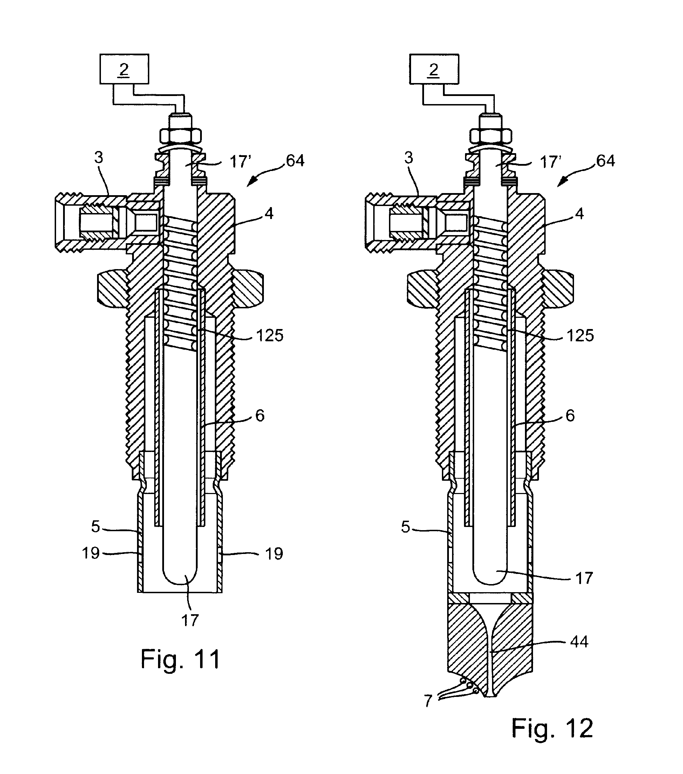

In Figur 11 wird wie in Figur 9 wird ein Brenner 64 gezeigt, der auch als Flammglühstartvorrichtung aus Figur 4 bekannt ist. Der Brenner 64 verfügt über eine Venturidüse 4, eine regelbare Drucklufterzeugungsvorrichtung 2 mit regelbarem Mengenbegrenzungsventil und eine Brennstoffversorgungsvorrichtung 3 mit regelbarem Mengenbegrenzungsventil sowie eine Saugstrahl- oder Venturidüse 4 und ein Rückstauflammrohr 5 auf. Zwischen Rückstauflammrohr 5 und Düse 4 ist eine Rezirkulationsvorrchtung 6 angeordnet. Im Bereich um die Düse 4, die auch in Figur 3 und 4 gezeigt wird ist eine Primärluftzufuhrvorrichtung angeordnet, dass sie die zusätzliche Luft tangential in Strömung versetzt. Die Drucklufterzeugungsvorrichtung 2 liefert eine Expansionsströmung, diese tritt in die Düse 4 ein und nimmt Brennstoff aus der Brennstoffversorgungsleitung 3 mit und wird mittels der Düse 4 atomisiert. Durch das Zusammenwirken von Expansionsströmung einerseits und Rückstauflammrohr 5 mit seinen oben ausführlich dargestellten Abgasöffnungen 18,19 entsteht ein Staudruck in der Hülse, in dem der atomisierte Öl-/Luftnebel mittels Zünder 17, der mittels elektrischer Verbindung 17' elektrisch angesteuert wird, höchst effizient verbrannt wird.

In Figur 12 wird wie in Figur 9 wird ein Brenner 64 gezeigt, der auch als Flammglühstartvorrichtung aus Figur 4 bekannt ist. Der Brenner 64 verfügt über eine Venturidüse 4, eine regelbare Drucklufterzeugungsvorrichtung 2 mit regelbarem Mengenbegrenzungsventil und eine Brennstoffversorgungsvorrichtung 3 mit regelbarem Mengenbegrenzungsventil sowie eine Saugstrahl- oder Venturidüse 4 und ein Rückstauflammrohr 5 auf. Zwischen Rückstauflammrohr 5 und Düse 4 ist eine Rezirkulationsvorrichtung 6 angeordnet. Im Bereich um die Düse 4, die auch in Figur 3 und 4 gezeigt wird, ist eine Primärluftzufuhrvorrichtung angeordnet, dass sie die zusätzliche Luft tangential in Strömung versetzt. Die Drucklufterzeugungsvorrichtung 2 liefert eine Expansionsströmung, diese tritt in die Düse 4 ein und nimmt Brennstoff aus der Brennstoffversorgungsleitung 3 mit und wird mittels der Düse 4 atomisiert. Durch das Zusammenwirken von Expansionsströmung einerseits und der Düsenaustrittsöffnung 44 mittels Zünder 17, der mittels elektrischer Verbindung 17' elektrisch angesteuert wird, eine effiziente Verbrennung des atomisierten Ölnebels.

## Patentansprüche

1. Vorrichtung, insbesondere zur Betriebsbefähigung von Flammstartanlagen, Rußfilter- bzw. Abgas-Partikelfiltervorrrichtungen an insbesondere Verbrennungskraftmaschinen, von BHKW und/oder Stirlingmotoren, zur Erzeugung von Energie, umfassend wenigstens eine Drucklufterzeugungsvorrichtung (2), wenigstens eine Brennstoffversorgungsvorrichtung (3), wenigstens eine Saugstrahl und/oder Venturidüse (4)

2. Vorrichtung nach Anspruch 1, **dadurch gekennzeichnet, dass** sie wenigstens ein Rückstauflammrohr (5) aufweist.

3. Vorrichtung nach Anspruch 1, **dadurch gekennzeichnet, dass** sie wenigstens eine Rezirkulationsvorrichtung (6) aufweist.

4. Vorrichtung nach einem oder mehreren der vorgenannten Ansprüche, **dadurch gekennzeichnet, dass** sie wenigstens eine Primärluftzufuhrvorrichtung (7) aufweist.

5. Vorrichtung nach einem oder mehreren der vorgenannten Ansprüche, **dadurch gekennzeichnet, dass** sie wenigstens eine Sekundärluftzufuhrvorrichtung (8) und/oder wenigstens eine Sekundärbrennstoffzufuhrvorrichtung (40) aufweist.

6. Vorrichtung nach einem oder mehreren der vorgenannten Ansprüche, **dadurch gekennzeichnet, dass** sie wenigstens eine Regel- bzw. Steuervorrichtung (9) aufweist.

7. Vorrichtung nach einem oder mehreren der vorgenannten Ansprüche, **dadurch gekennzeichnet, dass** sie wenigstens eine Temperatur (10)-und/oder Druck (11)- und /oder Brennstoffmengen (12)- und/oder Drehzahlmessvorrichtung (13) aufweist.

8. Vorrichtung nach einem oder mehreren der vorgenannten Ansprüche, **dadurch gekennzeichnet, dass** sie wenigstens eine Flammenüberwachungsvorrichtung (14), insbesondere mit Erdung (15) und Stromversorgung (16) aufweist.

9. Vorrichtung nach einem oder mehreren der vorgenannten Ansprüche, **dadurch gekennzeichnet, dass** sie wenigstens einen Zünder (17) aufweist.

10. Verfahren, insbesondere zur Betriebsbefähigung von Flammstartanlagen, Abgas-Partikelfiltern und/oder Rußfiltervorrichtungen und/oder BHKW und/oder Stirlingmotoren, zur Erzeugung von Energie, insbesondere Heizenergie, **dadurch gekennzeichnet, dass** eine Vorrichtung nach einem oder mehreren der vorgenannten Ansprüche zum Einsatz kommt.
